# EUROPEAN PATENT SPECIFICATION

(11) **EP 2 586 757 B1**
(45) Date of publication and mention of the grant of the patent: **29.06.2016**
(21) Application number: 11187160.4
(22) Date of filing: 28.10.2011
(51) Int. Cl.: C04B 111/10, C04B 40/00

(54) **Liquid chromium reducer for highly oxidative cement grinding environments**
Flüssigchromreduktor für hochgradig oxidative Zementmahlumgebungen
Réducteur de chrome liquide pour des environnements de meulage de ciments très oxydants

(43) Date of publication of application: 01.05.2013
(73) Proprietor: GCP Applied Technologies Inc., Cambridge, MA 02140 (US)
(72) Inventor: Stoppa, Riccardo, 20129 Milan (IT); DalMas, Gabriele, 20017 Milan (IT); Schibuola, Alessandro, 20030 Milan (IT); Jardine, Leslie, Burlington, MA Massachusetts 01803 (US)
(74) Representative: Duckworth, Timothy John

(56) References cited:
- EP-A1- 1 533 287
- US-A1- 2005 166 801
- US-A1- 2007 034 118

## Description

### Field of the Invention

This invention relates to compositions and methods for reducing hexavalent chromium in cements, particularly for use in cement that is manufactured, transported, and/or stored in highly oxidative environments.

### Background of the Invention

It is known in the cement industry to employ various metals for reducing hexavalent chromium ("Cr(VI)"), arising from the cement manufacturing process, to the less soluble trivalent chromium form.

It has been recognized that Cr(VI) has high solubility in water and is released when the cement is mixed with water, whereupon it may come into contact with human skin and cause dermal irritation for masons and other construction workers. It is also possible that chromium can leach into drinking water supplies.

In US Patent 7,601,328 owned by Chryso, Perez et al. disclosed a hydroxide aqueous suspension having a transition metal having a potential oxidation reduction less than that of the pair CrO₄²⁻/Cr(OH)₃ (-0.12 V) having a pH between 2 and 11 (limits excluded) for reducing the content of Cr(VI) to a value no greater than 2 ppm (parts per million) cement. In particular, this reference discloses aqueous suspensions of tin hydroxide and/or iron hydroxide and/or manganese hydroxide made using a hydro-soluble stabilization agent that is preferentially chosen from polynaphthalene sulfonates, polyoxyalkylene phosphonates, di-phosphonates and polyoxyalkylene polycarboxlates of molar mass less than 100,000 g/mol, and various thickeners having molar mass greater than 10⁶ g/mol. (See e.g., US Patent '328 at columns 5-6).

In US Patent 7,087,110 (US 2005/0166801), which is owned by the common assignee hereof, Jardine et al. disclosed a liquid additive used in the intergrinding manufacture of cement, and this additive includes stannous (tin II) chloride, an antioxidant and/or oxygen scavenger, and, optionally, a further additive such as a cement grinding enhancement aid or quality improver. Jardine '110 recognized that certain metals such as iron (II) had poor stability in the harsh environment of cement grinding mills, wherein temperatures often reach 80°-130° C or more. Such reducing metals, therefore, are often dosed excessively to ensure that Cr(VI) levels do not exceed prescribed minimum thresholds. This is problematic, however, in that excessive dosages of iron (II) can increase water demand and/or extend the set time of the cementitious system to a detrimental extent.

In US Patent 7,128,782 and EP 1533287, also owned by the common assignee hereof, Jardine et al. disclose a Cr(VI)-reducing composition which included solid particles of iron (II) sulfate and/or tin (II) sulfate substantially dispersed in a liquid carrier. It is disclosed that numerous viscosity modifying agents can be used for creating a liquid suspension of the particles which would provide an advantage over dry powder or dissolved forms of sulfate compositions. Co-additives such as antioxidants, oxygen scavengers, and other agents can be advantageously employed within the liquid suspension.

In US Patent Publication No. 2007/0034118 A1, also owned by the common assignee hereof, Jardine et al. disclose a liquid additive used in manufacturing cement wherein a non-lignosulfonate-based complexing agent is used for forming an association complex with the Cr(VI) reducer. The metal salt (e.g., based on tin, iron, or manganese) can be formed from chloride, bromide, acetate, oxide, sulfide, hydroxide, or sulfate; while the non-lignosulfonate-based complexing agent can comprise a polyhydroxy alcohol represented by the formula HOCH₂(CHOH)ₙCH₂OH wherein "n" is an integer of 3-8.

In US Patent Publication No. 2009/0266272, owned by Chryso, Andreani et al. disclose a Cr(VI) reducing composition comprising a complex of tin (II) and a carboxylic acid or salt thereof. Preferred carboxylic acids include hydroxylated carboxylic acids such as gluconic acid, tartaric acid, citric acid, and the salts thereof.

It is an objective of the present invention to provide a liquid composition having improved Cr(VI)-reducing ability and liquid storage stability, one that is particularly useful for manufacture, shipment, and/or storage of cement in environments that would degrade rapidly the Cr(VI)-reducing ability.

### Summary of the Invention

Liquid additive compositions and methods for reducing hexavalent chromium (Cr(VI)) in cement are provided which involve an inventive combination of conventional additive components which, when compared to prior art combinations, are found to provide surprisingly superior performance in terms of storage stability and/or Cr(VI)-reducing ability using relatively small amounts.

Thus, the invention provides a liquid additive composition for reducing hexavalent chromium in cement comprising: at least one metal chromium reducer in the amount of 5.0% to 50.0%; at least one alkylamine or alkanolamine compound in the amount of 1.0% to 40.0% (and more preferably 10.0% to 20.0%); at least one antioxidant, oxygen scavenger, or salt thereof, in the amount of 0.5% to 10.0%; at least one sugar alcohol, carbohydrate, or glycoside having ability to chelate and/or to form an association complex with said metal chromium reducer, said at least one sugar alcohol, carbohydrate, or glycoside being present in the amount of 1.0% to 25.0%; a natural gum or biopolymer polysaccharide stabilizer for the liquid additive composition in the amount of 0.0% to 1.0%; and water in the amount of 7.5% to 92.5% (all percentages herein by weight based on total weight of liquid composition).

A particularly preferred liquid additive composition comprises tin chloride, triethanolamine, sodium ascorbate, sorbitol, and diutan gum.

Methods and cementitious compositions involving a combination of cementitious binder and the aforementioned liquid additive composition are also described.

The invention thus provides a method for reducing chromium in cementitious compositions, comprising introducing to cement before, during, or after clinker is interground to produce cement, the liquid composition of the invention. In preferred methods, the liquid additive composition is added before or during the cement manufacture operation, or before, during, or after intergrinding of clinker to produce cement. The invention also provides a concrete composition comprising a cementitious binder and the liquid composition of the invention.

Other advantages and features of the invention may be discussed in further detail.

### Detailed Description of Exemplary Embodiments

Portland cement clinker is prepared by sintering a mixture of components including calcium carbonate (as limestone), aluminum silicate (as clay or shale), silicon dioxide (as sand) and miscellaneous iron oxides. During the sintering process, chemical reactions take place in which hardened nodules, commonly called "clinkers," are formed. After the clinker has cooled, it is pulverized together with a small amount of gypsum (calcium sulfate) in a finish grinding mill to provide a fine, homogeneous powdery product known as Portland cement.

Exemplary compositions and methods of the present invention involve the use of liquid additive compositions which are preferentially added to the cement clinker before or after the intergrinding thereof to produce cement; and it is contemplated that the liquid additive composition may be added to the finished cement after the intergrinding step, although this is less preferable.

Cementitious compositions prepared by processes of the invention thus comprise primarily cement made from cement clinker. Accordingly, such compositions may have at least 40% by weight of Portland cement, and typically up to 80% or more by weight of cement. Secondary argillaceous or pozzolanic materials may also be mixed with the cement clinker, such as clay, natural pozzolan, flyash, limestone, granulated blast furnace slag, or a mixture thereof, to provide a hydratable cementitious composition.

The cement liquid additive compositions of the present invention, and processes employing such compositions, are suitable for use in conventional cement grinding mills, including, without limitation, ball mills, and mills having rollers. For example, grinding processes involving two or more opposed rollers, as well as rollers used on circular tables, are contemplated herein. Preferably, the intergrinding occurs at a temperature in the range of 80°C - 140° C.

Liquid compositions of the invention for reducing hexavalent chromium in cement comprise: at least one metal chromium reducer in the amount of 5.0% to 50.0% by weight based on total weight of the liquid composition; at least one alkylamine or alkanolamine compound in the amount of 1.0% to 40.0% (and more preferably 10.0% to 20.0%) by weight based on total weight of the liquid composition; at least one antioxidant, oxygen scavenger, or salt thereof, in the amount of 0.5% to 10.0% by weight based on total weight of the liquid composition; at least one sugar alcohol, carbohydrate, or glycoside having ability to chelate and/or to form an association complex with the metal chromium reducer, the at least one sugar alcohol, carbohydrate, or glycoside being present in the amount of 1.0% to 25.0% by weight based on total weight of the liquid composition; a natural gum or biopolymer polysaccharide stabilizer for the liquid additive composition, the natural gum or biopolymer polysaccharide stabilizer being present in the amount of 0.0% to 1.0% by weight based on total weight of the liquid composition; and water in the amount of 7.5% to 92.5% by weight based on total weight of the liquid composition.

An exemplary method of the invention for reducing hexavalent chromium in cementitious compositions, therefore comprises combining a cementitious compound with the aforementioned liquid additive composition which is preferably used in the form of a blend. In preferred methods, the liquid additive composition is introduced to cement clinker before, during, and/or after the intergrinding thereof to provide cement. It may, for example, be combined with one of the components used for manufacturing the cement such as limestone, gypsum, pozzolanic materials, or secondary argillaceous materials which might be used in cement.

Exemplary metal chromium reducers believed suitable for use in the present invention include iron (II), tin (II), manganese (II), and antimony (III), which are preferably used in the form of salts, such as chloride, bromide, sulfate, or tartrate. Preferred are salts of tin (ii), particularly tin chloride.

Exemplary alkylamine compounds believed suitable for use in the present invention include trimethylamine and triethylamine; and exemplary alkanolamine compounds believed suitable for use in the present invention include diethanolamine ("DEA"), triethanolamine ("TEA"), triisopropanolamine ("TIPA"), N,N-bis(2-hydroxyethyl)-iso-propanolamine ("DEIPA"), N,N-bis(2 hydroxypropyl)-N-(hydroxyethyl)amine ("EDIPA), and tetrahydroxylethylethylenediamine ("THEED"). Exemplary compositions of the present invention could employ various combinations of alkylamine and/or alkanolamine compounds. Combinations of alkanolamine components which are preferred include TEA+THEED, TIPA+THEED, or TEA+TIPA+THEED.

Exemplary antioxidants or oxygen scavengers believed suitable for use in the present invention include those which are conventionally used in combination with Cr(VI) reducing agents. As used herein, the term "antioxidant" means and refers to compositions, materials, or compounds which, especially when incorporated into the liquid additive composition containing the Cr(VI)-reducing agent decreases the rate of oxidation or otherwise reduces the undesirable effects of oxidation upon the reducing metal. As used herein, the term "oxygen scavenger" means and refers to compositions, materials or compounds which, when included in the liquid additive composition comprising the Cr(VI)-reducing agent, can remove oxygen, such as (a) by reacting or combining with entrapped oxygen, or (b) by catalyzing an oxidation reaction yielding innocuous products. Conventional antioxidants and oxygen scavengers are disclosed in US Patent Nos. 7,128,782 and 7,087,110 (Grace) of Jardine.

Among the preferred antioxidants or oxygen scavengers are the substituted ethylenically unsaturated enediols, such as ascorbic acid, erythorbic acid, and their salts (e.g., sodium ascorbate, sodium erythorbate) and derivatives thereof. Any stereoisomer of these compounds can be effective in the current invention. For example, sodium ascorbate, potassium ascorbate, or other salt forms are included among a preferred antioxidants or oxygen scavengers contemplated for use in the present invention.

Exemplary sugar alcohols, carbohydrates, or glycosides believed to be suitable for use in the present invention include sorbitol, glycerol, maltitol, mannitol, and lactitol. Sorbitol is particularly preferred.

Optionally although preferably, the present invention further involves use of thickeners or stabilizers for the liquid additive composition. Suitable thickeners or stabilizers include those which are identified in US Patent 7,128,782 of Jardine. Particularly preferred for the present invention is the biopolymer polysaccharide known as "Diutan Gum" (or S-657) available from CP Kelco Biopolymers.

In particularly preferred chromium reducing compositions of the invention, the pH is preferably of 3-8, and more preferably 4-7. The present inventor notes that the use of TEA is partly as a pH adjustment agent, since the composition without TEA (e.g., tin chloride, sorbitol, and ascorbate alone) would otherwise by themselves in combination have a pH below 2. Thus, the pH of exemplary chromium reducing compositions of the invention can be stabilized using pH buffers, such as acetic acid and sodium acetate. Other exemplary pH buffer components include citric acid and sodium citrate in combination. Thus, an exemplary pH adjustment agent comprises an acid and its corresponding sodium salt.

The present invention also pertains to Portland cement compositions made from the above-described methods. Such cement compositions may also optionally contain fly ash, granulated blast furnace slag, or other components conventionally associated with or used in combination with Portland cement.

### Example I

### (Example of liquid chromium reducing composition of the present invention)

An exemplary hexavalent chromium composition of the invention is formulated as follows: 12.5 grams of tin chloride dihydrate is combined with 10.9 grams of triethanolamine ("TEA"), 5.75 grams of sorbitol, and 1.9 grams of sodium ascorbate; water was added to these components in the amount of 24.9 grams to provide an aqueous suspension, and into this liquid was dissolved 0.1 gram of xanthan gum to stabilize the suspension. This liquid suspension appears whitish in color. This liquid suspension did not separate over a period of at least three weeks at constant room temperature.

The performance of the above liquid chromium-reducing composition was tested as follows. The liquid chromium-reducing composition added to cement in the amount of 847 ppm of liquid composition to uncured Portland cement which contains 16.0 ppm of hexavalent chromium. After this cement was stored for 2 hours, 100 grams of the cement is mixed with 100 grams of water for 4 minutes. The resulting cement paste is centrifuged and the free water is collected, and the amount of hexavalent chromium (Cr(VI)) is determined by UV at 372 nm. (An exemplary procedure for determining Cr(VI) in cement has been published by the UK Cement Industry (See e.g., Procedure No. TSD/C/ 171 (date issued: 16.10.97), referencing UK Cement Industry ref: BCA/TEAM/CC/10.1 (December 1991)).

In a series of 3 tests measuring Cr(VI) reduced compared to the baseline cement, 3.7 moles Tin (II) was required per mole Cr(VI) reduced. The standard deviation was 0.38 moles Tin (II)/mole Cr(VI) reduced.

### Example 2

### (Comparative Example)

In this example, sorbitol is replaced by sodium gluconate which has been previously taught for complexing with tin. It is confirmed that both performance and stability were inferior to the exemplary liquid chromium reducer composition described above in Example 1.

The comparative formulation is prepared using 12.5 grams of tin chloride dihydrate, 10.9 grams of TEA, 5.75 grams of sodium gluconate, and 1.9 grams of sodium ascorbate, which were mixed into an aqueous solution/suspension, stabilized with 0.1 gram of xanthan gum.

This comparative formulation formed a whitish suspension; but this composition separated after only one week at normal room temperature and displayed a yellow water, which bled from the composition at the top of the whitish suspension.

In a series of 2 tests, performed according to the same protocol as Example 1, 5.2 moles Tin (II) was required per mole Cr(VI) reduced. Standard deviation was 0.35 moles Tin (II)/mole Cr(VI) reduced. This amount of 5.2 chromium-reducing composition demonstrated that this performance was significantly inferior to the chromium reducing performance of the exemplary liquid composition described above in Example 1, which required only 3.7 moles tin (II) per mole Cr(VI) reduced.

Thus, replacement of sorbitol with sodium gluconate compromised both the formulation stability and ability to reduce Cr(VI) with a low required level of tin (II).

### Example 3

In this example, sorbitol is replaced with a glycerol, and it was confirmed that stability of the resultant additive composition was inferior to the exemplary liquid chromium reducer composition described in Example 1 above.

The comparative formulation was prepared using 12.5 grams of tin chloride dihydrate, 10.9 grams of TEA, 5.75 grams of glycerol, and 1.9 grams of sodium ascorbate, which were mixed into an aqueous solution, stabilized with 0.1 gram of xanthan gum.

This formulation exhibited separation after 3 weeks.

In a series of 2 tests, performed according to the same protocol as example 1, 3.3 moles Tin (II) was required per mole Cr(VI) reduced. Standard deviation was 0.21 moles Tin (II)/mole Cr(VI) reduced.

Thus, when compared to Example 1, it can be seen that replacing sorbitol with glycerol led to a decrease in formulation stability, although the ability to reduce Cr(VI) with a low tin (II) was not seriously affected. Thus, preferred compositions of the invention would include sorbitol.

### Example 4

### (Further Comparative Example)

In this comparative example, the use of an oxygen scavenger was omitted, and it was confirmed that the ability to reduce Cr(VI) with low amounts of tin (II) was somewhat compromised in comparison to the exemplary liquid chromium reducer composition described above in Example 1.

The comparative formulation was prepared using 12.5 grams of tin chloride dehydrate, 10.9 grams of TEA, 5.75 grams of sorbitol, and 0.1 grams of xanthan gum. The resultant formulation was a white suspension, storage stable for at least 3 weeks.

In a series of 2 tests, performed according to the same protocol as described for Example 1, it was confirmed that 4.3 moles of tin (II) was required for each mole Cr(VI) reduced. Standard deviation was 0.07 moles Tin (II)/moleCr(VI) reduced.

Thus, when compared to the results of Example, it was shown that removing sodium ascorbate led to a decrease of ability to recue Cr(VI) levels using low levels of tin (II).

### Example 5

### (Further Comparative Example)

In this comparative example, the use of sorbitol was omitted, and it was confirmed that the ability to reduce Cr(VI) with low amounts of tin (II), as well as the stability of the formulation in storage, were compromised.

The comparative formulation was prepared using 12.5 grams of tin chloride dihydrate, 10.9 grams of TEA, 1.9 grams of sodium ascorbate in an aqueous solution, stabilized with 0.1 grams of xanthan gum.

The resultant formulation was seen to form a sludge after one week.

In a series of 2 tests, performed according to the same protocol as example 1, 5.2 moles Tin (II) was required per mole Cr(VI) reduced. Standard deviation was 0.14 moles Tin (II)/mole Cr(VI) reduced.

Thus, in comparison to Example 1, the removal of sorbitol led to loss of formulation stability as well as in loss of ability reduce Cr(VI) with a low required level of tin (II).

### Example 6

### (Further Comparative Example)

In this comparative example, the use of triethanolamine (TEA) - was omitted from the exemplary composition described in Example 1, and it was confirmed that this caused a reduction in storage stability as well as the ability to reduce Cr(VI) with low amounts of tin (II).

The comparative formulation was prepared using 12.5 grams of tin chloride dihydrate combined with 5.75 grams of sorbitol and 1.9 sodium ascorbate, in an aqueous solution, stabilized with 0.1 gram of xanthan gum.

The resultant formulation precipitated immediately.

In a series of 2 tests, performed according to the same protocol as described in Example 1, 9.1 moles tin II) was required per mole Cr(VI) reduced. Standard deviation was 0.28 moles Tin (II)/mole Cr(VI) reduced.

Thus, the removal of TEA was seen to decrease formulation stability as well as the ability to reduce Cr(VI) with a low required level of tin (II), when compared to the exemplary composition described in Example 1.

### Example 7

### (Further Comparative Example)

In this comparative example, sorbitol and sodium ascorbate were both omitted from the exemplary composition described in Example 1, and this was confirmed to have a detrimental effect on both formulation storage stability and capability to reduce Cr(VI) using small amounts of tin (II).

The comparative formulation was prepared using 12.5 grams of tin chloride dehydrate combined with 10.9 grams of TEA in an aqueous solution, stabilized with 0.1 gram of xanthan gum.

The resultant formulation formed a crust overnight.

In a series of 2 tests, performed according to the same protocol as in Example 1, 8.1 moles Tin (II) was required per mole Cr(VI) reduced. Standard deviation was 0.77 moles Tin (II)/mole Cr(VI) reduced.

Thus, in comparison to the exemplary composition described in Example 1, it was confirmed that the removal of sodium ascorbate and sorbitol decreased both the formulation stability and ability to reduce Cr(VI) with a low level of tin (II).

### Examples 8a and 8b

### (Further Comparative Example)

Chromium reducing agents need to be able to resist oxidation (with oxygen, especially in humid environments) over long periods of cement storage. Thus, in the following sub-examples below, the chromium-reducing compositions made in accordance with PRIOR ART teachings are compared directly with a composition made pursuant to the present invention, and tested in mild and harsh oxidizing conditions in cement systems. The results demonstrate that the chromium-reducing compositions of the present invention are unaffected by a change from a mild oxidizing condition to a harsher oxidizing condition, while PRIOR ART compositions made according to US 2007/0034118 and 7,087,110, which will be described respectively in Comparative Examples 8a and 8b below, demonstrate less efficiency in terms of moles tin (II) required per moles chromium reduced.

### Comparative Example 8a

A PRIOR ART chromium reducing composition (See e.g., 2007/0034118) is prepared using the following components and amounts: tin sulfate (23.7 grams), sodium gluconate (13.5 grams), and water (62.8 grams). The first two are combined and then water is added to obtain an aqueous solution. The performance of this PRIOR ART chromium-reducing composition is tested two different ways:
(1) This liquid chromium-reducing composition is added to cement in the amount of 769 ppm of liquid composition (containing 100 ppm Tin (II)) to uncured Portland cement containing 12.7 ppm of hexavalent chromium. After this cement was stored for 2 hours, 100 grams of the cement is mixed with 100 grams of water for 4 minutes. The resulting cement paste is centrifuged; free water is collected; and the amount of Cr(VI) is determined by UV at 372 nm. Measuring Cr(VI) reduced compared to the baseline cement, it is determined that 10 moles of tin (II) was required per mole Cr(VI) reduced.
(2) The liquid chromium-reducing composition, in the amount of 769 ppm of liquid composition (containing 100 ppm tin (II)) was added to 100g of water, which was then immediately mixed for 4 minutes with 100g of uncured Portland cement which contains 12.7 ppm of hexavalent chromium. The resulting cement paste is centrifuged; the free water is collected; and the amount of hexavalent chromium (Cr(VI)) is determined by UV at 372 nm. Measuring Cr(VI) reduced compared to the baseline cement, it is determined that 5.4 moles tin (II) was required per mole Cr(VI) reduced.

A chromium-reducing composition in accordance with the present invention is prepared using the following components: tin chloride dehydrate (14.6 grams); triethanolamine ("TEA") (14.8 grams; sorbitol (6.8 grams); sodium ascorbate (2.2 grams); water (61.3 grams); and xanthan gum (0.2 grams). The first four components are preferably combined to obtain an aqueous suspension first, and then the xanthan gum is added to stabilize the aqueous suspension.

The performance of the above liquid chromium-reducing composition of the present invention is tested in two ways.
(1) The liquid chromium-reducing composition was added to cement in the amount of 1299 ppm of liquid composition (containing 100 ppm Tin (II)) to uncured Portland cement which contains 12.7 ppm of hexavalent chromium. After this cement was stored for 2 hours, 100 grams of the cement is mixed with 100 grams of water for 4 minutes. The resulting cement paste is centrifuged and the free water is collected, and the amount of hexavalent chromium (Cr(VI)) is determined by UV at 372 nm. Measuring Cr(VI) reduced compared to the baseline cement, it is determined that 3.8 moles Tin (II) was required per mole Cr(VI) reduced.
(2) The liquid chromium-reducing composition, in the amount of 974 ppm of liquid composition (containing 75 ppm Tin (II)) was added to 100g of water, which was then immediately mixed for 4 minutes with 100g of uncured Portland cement which contains 12.7 ppm of hexavalent chromium. The resulting cement paste is centrifuged and the free water is collected, and the amount of hexavalent chromium (Cr(VI)) is determined by UV at 372 nm. Measuring Cr(VI) reduced compared to the baseline cement, it is determined that 3.3 moles Tin (II) was required per mole Cr(VI) reduced.

Results of the above comparative test are summarized below in Table 1. It can be seen that the chromium reducing composition made in accordance with the present invention shows greater efficiency in terms of moles Cr(VI) reduced, for both mild and harsh oxidative conditions.

**Table 1**

| | *(Comparative Testing Results)* | |
|---|---|---|
| | **Moles Tin (II) required per mole Cr(VI) reduced** | |
| | **Pre-blended with cement (harsh oxidative conditions)** | **Mix water addition (mild oxidative conditions)** |
| **PRIOR ART** | 10 moles Tin (II) was required | 5.4 moles Tin (II) was required |
| (US2007/0034118) | per mole Cr(VI) reduced | per mole Cr(VI) reduced |
| | | |
| **EXAMPLE OF PRESENT** | 3.8 moles Tin (II) was required | 3.3 moles Tin (II) was required |
| **INVENTION** | per mole Cr(VI) reduced | per mole Cr(VI) reduced |

### Comparative Example 8b

A PRIOR ART chromium reducing composition (See e.g., US 7,087,110) is prepared using the following components and amounts: tin chloride (25 grams), sodium ascorbate (3.8 grams), and water (71.2 grams). Preferably, the first two are mixed together and then the water is added to provide an aqueous solution.

The performance of this composition is test in two different ways.
1) The liquid chromium-reducing composition added to cement in the amount of 752 ppm of liquid composition (containing 100 ppm Tin(II)) to uncured Portland cement which contains 13.5 ppm of hexavalent chromium. After this cement was stored for 2 hours, 100 grams of the cement is mixed with 100 grams of water for 4 minutes. The resulting cement paste is centrifuged and the free water is collected, and the amount of hexavalent chromium (Cr(VI)) is determined by UV at 372 nm. Measuring Cr(VI) reduced compared to the baseline cement, it is determined that 12.1 moles Tin (II) was required per mole Cr(VI) reduced.
2) The liquid chromium-reducing composition, in the amount of 752 ppm of liquid composition (containing 100 ppm Tin (II)) was added to 100g of water, which was then immediately mixed for 4 minutes with 100g of uncured Portland cement which contains 13.5 ppm of hexavalent chromium. The resulting cement paste is centrifuged and the free water is collected, and the amount of hexavalent chromium (Cr(VI)) is determined by UV at 372 nm. Measuring Cr(VI) reduced compared to the baseline cement, it is determined that 3.9 moles Tin (II) was required per mole Cr(VI) reduced.

1) The liquid chromium-reducing composition was added to cement in the amount of 893 ppm of liquid composition (containing 100 ppm Tin (II)) to uncured Portland cement which contains 13.5 ppm of hexavalent chromium. After this cement was stored for 2 hours, 100 grams of the cement is mixed with 100 grams of water for 4 minutes. The resulting cement paste is centrifuged and the free water is collected, and the amount of hexavalent chromium (Cr(VI)) is determined by UV at 372 nm. Measuring Cr(VI) reduced compared to the baseline cement, it is determined that 3.6 moles Tin (II) was required per mole Cr(VI) reduced.
2) The liquid chromium-reducing composition, in the amount of 893 ppm of liquid composition (containing 100 ppm Tin (II)) was added to 100g of water, which was then immediately mixed for 4 minutes with 100g of uncured Portland cement which contains 13.5 ppm of hexavalent chromium. The resulting cement paste is centrifuged and the free water is collected, and the amount of hexavalent chromium (Cr(VI)) is determined by UV at 372 nm. Measuring Cr(VI) reduced compared to the baseline cement, it is determined that 3.8 moles Tin (II) was required per mole Cr(VI) reduced.

Results of the above comparative test are summarized below in Table 2. It can be seen that the chromium reducing composition made in accordance with the present invention has approximately similar efficiency in terms of moles Cr(VI) reduced in the mild oxidative condition; however, the efficiency of chromium reducing composition made in accordance with the present invention displayed surprisingly greater efficiency in the harsh oxidative condition. Hence, the present inventor believes the increased efficiency, which is nearly four times that of the prior art formulation, was surprising and unexpected.

**Table 2**

| | *(Comparative Testing Results)* | |
|---|---|---|
| | **Moles Tin (II) required per mole Cr(VI) reduced** | |
| | **Pre-blended with cement (harsh oxidative conditions)** | **Mix water addition (mild oxidative conditions)** |
| PRIOR ART (US 7,087,110) | 12.1 moles Tin (II) was required per mole Cr(VI) reduced | 3.9 moles Tin (II) was required per mole Cr(VI) reduced |
| | | |
| **EXAMPLE OF PRESENT INVENTION** | 3.6 moles Tin (II) was required per mole Cr(VI) reduced | 3.8 moles Tin (II) was required per mole Cr(VI) reduced |

The foregoing illustrations and examples are provided for illustrative purposes only and not intended to limit the scope of the invention.

## Claims

1. A liquid composition for reducing hexavalent chromium in cement, comprising:
at least one metal chromium reducer in the amount of 5.0% to 50.0% by weight based on total weight of said liquid composition;
at least one alkylamine or alkanolamine compound in the amount of 1.0% to 40.0% by weight based on total weight of said liquid composition; and
at least one antioxidant, oxygen scavenger, or salt thereof, in the amount of 0.5% to 10.0% by weight based on total weight of said liquid composition;
at least one sugar alcohol, carbohydrate, or glycoside having ability to chelate and/orto form an association complex with said metal chromium reducer, said at least one sugar alcohol, carbohydrate, or glycoside being present in the amount of 1.0% to 40.0% by weight based on total weight of said liquid composition;
a natural gum or biopolymer polysaccharide stabilizer for the liquid additive composition, said natural gum or biopolymer polysaccharide stabilizer being present in the amount of 0.0% to 1.0% by weight based on total weight of said liquid composition; and
water in the amount of 7.5% to 92.5% by weight based on total weight of said liquid composition.

2. The liquid composition of claim 1 wherein said at least one metal chromium reducer is selected from the group consisting of iron (II), tin (II), manganese (II), and antimony (III), preferably tin (II).

3. The liquid composition of claim 2 wherein said at least one metal chromium reducer is provided in the form of tin chloride.

4. The liquid composition of claim 1, 2 or 3 wherein said at least one alkylamine or alkanolamine compound is selected from the group consisting of triethylamine, trimethylamine, diethanolamine ("DEA"), triethanolamine ("TEA"), triisopropanolamine ("TIPA"), N,N-bis(2-hydroxyethyl)-iso-propanolamine ("DEIPA"), N,N-bis(2-hydroxypropyl)-N-(hydroxyethyl)amine ("EDIPA), and tetrahydroxyl ethylethylene diamine ("THEED").

5. The liquid composition of any preceding claim wherein said at least one alkanolamine compound is TEA.

6. The liquid composition of any preceding claim wherein said at least one antioxidant, oxygen scavenger, or salt thereof is selected from the group consisting of ascorbic acid, erythorbic acid, and their salts.

7. The liquid composition of claim 6 wherein said at least one antioxidant, oxygen scavenger, or salt thereof is sodium ascorbate.

8. The liquid composition of any preceding claim wherein said at least one sugar alcohol, carbohydrate, or glycoside is selected from the group consisting of sorbitol, glycerol, maltitol, mannitol, and lactitol.

9. The liquid composition of claim 8 comprising sorbitol.

10. The liquid composition of any preceding claim wherein said at least one a natural gum or biopolymer polysaccharide stabilizer is selected from the group consisting of diutan gum.

11. The liquid composition of claim 1 comprising tin chloride, triethanolamine, sodium ascorbate, sorbitol, and diutan gum.

12. The liquid composition of any preceding claim wherein the pH of said composition is 3-8.

13. The liquid composition of any preceding claim further comprising a pH buffering system.

14. Method for reducing chromium in cementitious compositions, comprising introducing to cement before, during, or after clinker is interground to produce cement, the composition of any preceding claim.

15. A concrete composition comprising a cementitious binder and the liquid composition of any of claims 1 to 13.

## Patentansprüche

1. Flüssige Zusammensetzung zur Reduzierung von sechsbindigem Chrom in Zement, das
mindestens einen Metallchromreduzierer in einer Menge von 5,0 Gew.-% bis 50,0 Gew.-%, bezogen auf das Gesamtgewicht der flüssigen Zusammensetzung;
mindestens eine Alkylamin- oder Alkanolaminverbindung in einer Menge von 1,0 Gew.-% bis 40,0 Gew.-%, bezogen auf das Gesamtgewicht der flüssigen Zusammensetzung; und mindestens ein Antioxidans, einen Sauerstofffänger oder ein Salz derselben in einer Menge von 0,5 Gew.-% bis 10,0 Gew.-%, bezogen auf das Gesamtgewicht der flüssigen Zusammensetzung;
mindestens einen Zuckeralkohol, ein Kohlenhydrat oder ein Glycosid mit der Fähigkeit ein Chelat und/oder einen Assoziierungskomplex mit dem Metallchromreduzierer zu bilden, wobei der mindestens eine Zuckeralkohol, das mindestens eine Kohlenhydrat oder das mindestens eine Glycosid in einer Menge von 1,0 Gew.-% bis 40,0 Gew.-%, bezogen auf das Gesamtgewicht der flüssigen Zusammensetzung, vorhanden ist;
einen natürliches Gum- oder Biopolymerpolysaccharid-Stabilisator für die flüssige Zusammensetzung, wobei der natürliches Gum- oder Biopolymerpolysaccharid-Stabilisator in einer Menge von 0,0 Gew.-% bis 1,0 Gew.-%, bezogen auf das Gesamtgewicht der flüssigen Zusammen-setzung, vorhanden ist; und
Wasser in einer Menge von 7,5 Gew.-% bis 92,5 Gew.-%, bezogen auf das Gesamtgewicht der flüssigen Zusammensetzung, umfasst.

2. Flüssige Zusammensetzung nach Anspruch 1, bei der der mindestens eine Metallchromreduzierer aus der Gruppe bestehend aus Eisen (II), Zinn (II), Mangan (II), und Antimon(III), vorzugsweise Zinn(II), ausgewählt ist.

3. Flüssige Zusammensetzung nach Anspruch 2, bei der der mindestens eine Metallchromreduzierer in Form von Zinnchlorid bereitgestellt wird.

4. Flüssige Zusammensetzung nach Anspruch 1, 2 oder 3, bei der das mindestens eine Alkylamin oder Alkanolamin aus der Gruppe bestehend aus Triethylamin, Trimethylamin, Diethanolamin ("DEA"), Triethanolamin ("TEA"), Triisopropanolamin ("TIPA"), N,N-Bis(2-hydroxyethyl)-isopropanolamin ("DEIPA"), N,N-Bis(2-hydroxypropyl)-N-(hydroxyethyl)amin ("EDIPA"), und Tetrahydroxylethylethylenediamin ("THEES").

5. Flüssige Zusammensetzung nach einem der vorhergehenden Ansprüche, bei der die mindestens eine Alkanolaminverbindung TEA ist.

6. Flüssige Zusammensetzung nach einem der vorhergehenden Ansprüche, bei der das mindestens eine Antioxidans, der mindestens eine Sauerstofffänger oder das Salz derselben aus der Gruppe bestehend aus Ascorbinsäure, Erythorbinsäure und deren Salzen ausgewählt ist.

7. Flüssige Zusammensetzung nach einem der vorhergehenden Ansprüche, bei der das mindestens eine Antioxidans, der mindestens eine Sauerstofffänger oder das Salz derselben Natriumascorbat ist.

8. Flüssige Zusammensetzung nach einem der vorhergehenden Ansprüche, bei der der mindestens eine Zuckeralkohol, das mindestens eine Kohlenhydrat oder das mindestens eine Glycosid aus der Gruppe bestehend aus Sorbitol, Malitol, Mannitol und Lactitol ausgewählt ist.

9. Flüssige Zusammensetzung nach Anspruch 8, die Sorbitol umfasst.

10. Flüssige Zusammensetzung nach einem der vorhergehenden Ansprüche, bei der der mindestens eine natürliches Gum- oder Biopoymerpolysaccharid-Stabilisator aus der Gruppe bestehend aus Diutan-Gum ausgewählt ist.

11. Flüssige Zusammensetzung nach Anspruch 1, die Zinnchlorid, Triethanolamin, Natriumascorbat, Sorbitol und Diutan-Gum umfasst.

12. Flüssige Zusammensetzung nach einem der vorhergehenden Ansprüche, bei der der pH-Wert der Zusammensetzung 3 bis 8 beträgt.

13. Flüssige Zusammensetzung nach einem der vorhergehenden Ansprüche, die ferner ein pH-Puffersystem umfasst.

14. Verfahren zur Reduzierung von Chrom in zementartigen Zusammensetzungen, bei dem bevor, während oder nachdem Klinker zur Herstellung von Zement zugemahlen wird, die Zusammensetzung gemäß einem der vorhergehenden Ansprüche dem Zement zugeführt wird.

15. Zementzusammensetzung, die einen zementartigen Binder und die flüssige Zusammensetzung gemäß einem der Ansprüche 1 bis 13 umfasst.

## Revendications

1. Composition liquide servant à réduire du chrome hexavalent dans un ciment, comportant :
- au moins un réducteur métallique du chrome, en une proportion de 5,0 à 50,0 %, en poids rapporté au poids total de ladite composition liquide,
- au moins un composé de type alkyl-amine ou alcanol-amine, en une proportion de 1,0 à 40,0 %, en poids rapporté au poids total de ladite composition liquide,
- au moins un agent antioxydant, un agent de piégeage d'oxygène ou un sel d'un tel agent, en une proportion de 0,5 à 10,0 %, en poids rapporté au poids total de ladite composition liquide,
- au moins un alcool de sucre, un glucide ou un glycoside capable de former un chélate et/ou un complexe d'association avec ledit réducteur métallique du chrome, lequel alcool de sucre, glucide ou glycoside au nombre d'au moins un se trouve présent en une proportion de 1,0 à 40,0 %, en poids rapporté au poids total de ladite composition liquide,
- un agent stabilisant ladite composition liquide d'adjuvants, de type gomme naturelle ou biopolymère polysaccharide, lequel stabilisant de type gomme naturelle ou biopolymère polysaccharide se trouve présent en une proportion de 0,0 à 1,0 %, en poids rapporté au poids total de ladite composition liquide,
- et de l'eau, en une proportion de 7,5 à 92,5 %, en poids rapporté au poids total de ladite composition liquide.

2. Composition liquide conforme à la revendication 1, dans laquelle ledit réducteur métallique du chrome au nombre d'au moins un est choisi dans l'ensemble formé par les fer-(II), étain-(II), manganèse-(II) et antimoine-(III), et de préférence, est de l'étain-(II).

3. Composition liquide conforme à la revendication 2, dans laquelle ledit réducteur métallique du chrome au nombre d'au moins un est apporté sous forme de chlorure d'étain.

4. Composition liquide conforme à la revendication 1, 2 ou 3, dans laquelle ledit composé de type alkyl-amine ou alcanol-amine au nombre d'au moins un est choisi dans l'ensemble formé par les tri-éthylamine, triméthylamine, tridiéthanolamine (DEA), triéthanolamine (TEA), triisopropanolamine (TIPA), N,N-bis(2-hydroxy-éthyl)-2-éthyl-diisopropanolamine (DEIPA), N,N-bis(2-hydroxy-propyl)-N-(hydroxy-éthyl)-amine (EDIPA), et tétrakis(hydroxy-éthyl)-éthylènediamine (THEED).

5. Composition liquide conforme à l'une des revendications précédentes, dans laquelle ledit composé de type alcanol-amine au nombre d'au moins une est de la TEA.

6. Composition liquide conforme à l'une des revendications précédentes, dans laquelle ledit agent antioxydant, agent de piégeage d'oxygène ou sel d'un tel agent, au nombre d'au moins un, est choisi dans l'ensemble constitué par l'acide ascorbique, l'acide érythorbique et leurs sels.

7. Composition liquide conforme à la revendication 6, dans laquelle ledit agent antioxydant, agent de piégeage d'oxygène ou sel d'un tel agent, au nombre d'au moins un, est de l'ascorbate de sodium.

8. Composition liquide conforme à l'une des revendications précédentes, dans laquelle ledit alcool de sucre, glucide ou glycoside, au nombre d'au moins un, est choisi dans l'ensemble constitué par les sorbitol, glycérol, maltitol, mannitol et lactitol.

9. Composition liquide conforme à la revendication 8, qui comporte du sorbitol.

10. Composition liquide conforme à l'une des revendications précédentes, dans laquelle ledit stabilisant de type gomme naturelle ou biopolymère polysaccharide, au nombre d'au moins un, est choisi dans l'ensemble constitué par la gomme de diutane.

11. Composition liquide conforme à la revendication 1, qui comporte du chlorure d'étain, de la triéthanolamine, de l'ascorbate de sodium, du sorbitol et de la gomme de diutane.

12. Composition liquide conforme à l'une des revendications précédentes, dont le pH vaut de 3 à 8.

13. Composition liquide conforme à l'une des revendications précédentes, qui comporte en outre un système tampon de pH.

14. Procédé de réduction du chrome dans des compositions de ciment, comportant le fait d'introduire dans le ciment, avant, pendant ou après le broyage intermédiaire de clinker en vue de la production de ciment, une composition conforme à l'une des revendications précédentes.

15. Composition de béton comprenant un liant cimentaire et une composition liquide conforme à l'une des revendications 1 à 13.
